# EUROPEAN PATENT SPECIFICATION

(11) **EP 2 174 037 B1**
(45) Date of publication and mention of the grant of the patent: **21.09.2011**
(21) Application number: 07827620.1
(22) Date of filing: 30.07.2007
(51) Int. Cl.: F16D 65/21

(54) **ELECTRICAL PARKING BRAKE**
ELEKTRISCHE FESTSTELLBREMSE
FREIN À MAIN ÉLECTRIQUE

(43) Date of publication of application: 14.04.2010
(73) Proprietor: Freni Brembo S.p.A., 24035 Curno (Bergamo) (IT)
(72) Inventor: CARRARA, Marco, I-20062 Cassano D'Adda, Milano (IT); SALA, Paolo, I-24030 Villa D'Adda, Bergamo (IT); CANTONI, Carlo, I-24020 Gorle, Bergamo (IT)
(74) Representative: Leihkauf, Steffen Falk
(86) International application number: PCT/IT2007/000540
(87) International publication number: WO 2009/016660

(56) References cited:
- WO-A-99/21266
- WO-A-99/37010
- WO-A-2004/057205
- WO-A-2004/081404
- WO-A-2007/039922

## Description

The object of the present invention is an electrical parking brake for a disc brake.

Parking brakes and electromechanical emergency brakes are known, equipped with a rotary electrical actuator and a nut-screw thrusting group that acts upon the hydraulic piston of the service disc brake or upon a suitable parking piston, in the case in which the parking brake constitutes an autonomous constructive unit.

Electromechanical disc brakes are also known that have a caliper body having two walls arranged on both sides of the brake disc and connected together through two or more connection bridges that extend straddling the disc. The wall of the caliper body facing towards the inside of the vehicle comprises holes for receiving respective attachment screws for attaching the caliper body to the suspension of the vehicle so that they rotate and translate as a unit. In both of the walls of the caliper body a seat is formed for receiving a pad carrying a coating of friction material facing towards the brake disc and at least one of the walls defines one or more seats for a piston suitable for locking the pads against the brake disc to generate the braking force. The piston is in turn connected with an electromechanical actuator. The electromechanical actuator comprises for example an electric motor, a belt transmission that transmits the rotary motion of the drive shaft to a reducer, which turns a recirculating ball screw that engages a corresponding nut. The nut is locked in rotation and free to translate and engages the piston or forms an integral part thereof. In this way, a rotation of the recirculating ball screw leads to a translation of the piston and of the corresponding pad in engagement against the brake disc. With the electric motor deactivated, the recirculating ball engagement between the screw and the nut allow immediate and automatic detachment of the pad from, the brake disc, which is an essential condition for service brakes.

For some time there has been a need for an electromechanical parking brake, able to be connected to a fixed caliper of a disc brake and able to be actuated electrically.

In particular there is a great need for such a parking brake to ensure the locking force on the brake disc even without the supply of electrical power of the engine. WO 99/37010 describe a prior art parking brake which can be considered a closest prior art for the present invention

Known solutions described previously without doubt form a starting point for the development of such an electromechanical parking brake, but they have some problems that are as yet unsolved.

By way of the interaction between the functions of actuation, rotary motion transmission, rotary motion reduction and conversion of rotary motion into translation motion, known solutions, as well as being bulky, have numerous individual components that must be manufactured and assembled with very tight tolerances. Moreover, the concentration of a plurality of functions (for example crown gear and housing) in a single piece hinder a differentiated use of different materials for different stresses and of different tolerances for different functions.

The object of the present invention is therefore to provide an electromechanical parking brake for a disc brake, having characteristics such as to avoid at least some of the quoted drawbacks with reference to the prior art.

Within the general purpose, a particular object of the present invention is to provide an electromechanical parking brake for a disc brake having a simplified and strong structure with reduced bulk.

These and other purposes are accomplished through an electromechanical parking brake for a disc brake according to claim 1. Advantageous embodiments are the object of the dependent claims.

In order to better understand the present invention and to appreciate its advantages, some nonlimiting example embodiments thereof shall be described hereafter, with reference to the attached figures, in which:

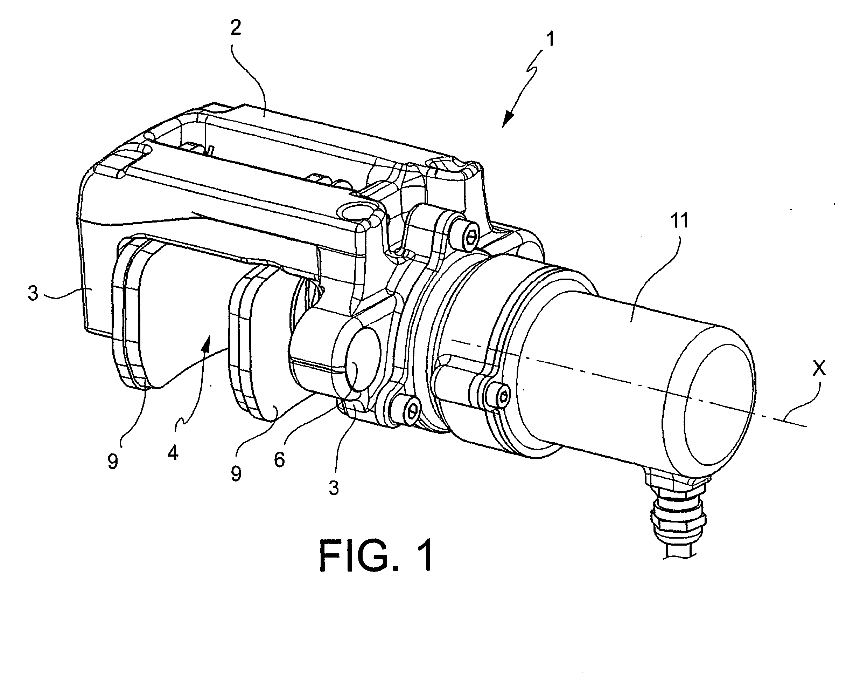

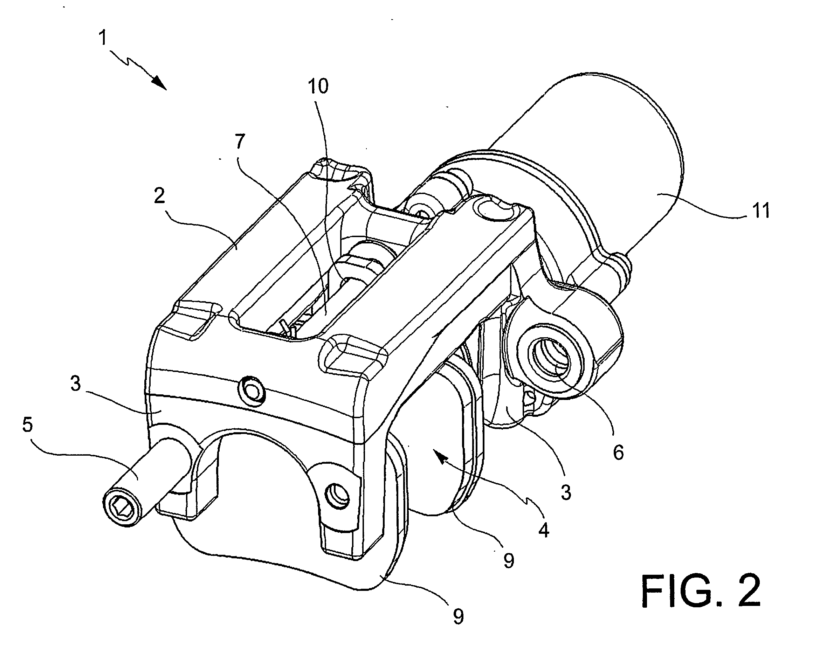

figures 1 and 2 are perspective views of a parking brake according to an embodiment of the invention;

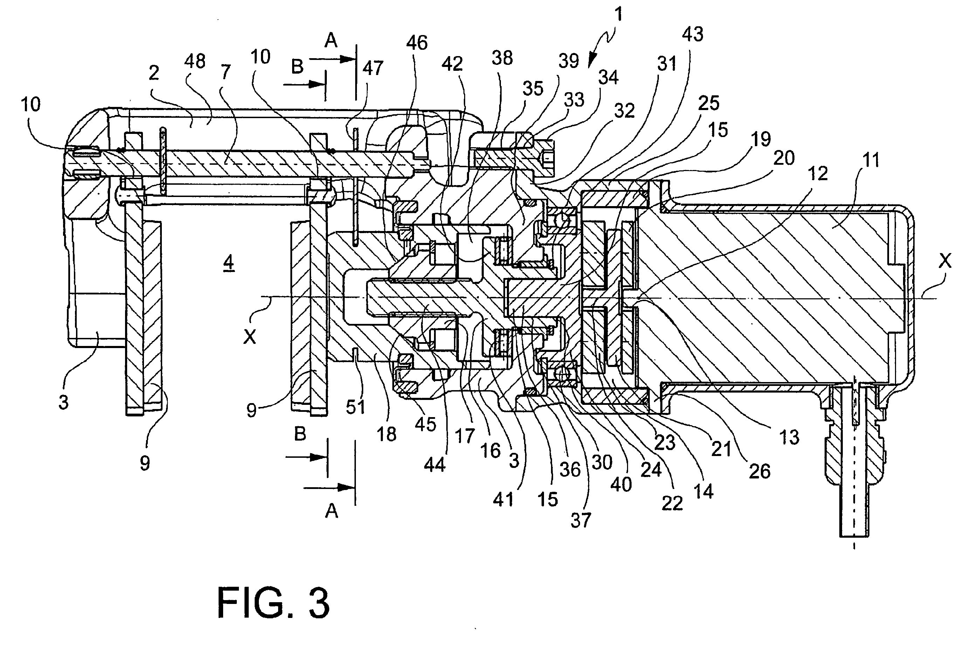

figure 3 is a section view of the parking brake in figure 1;

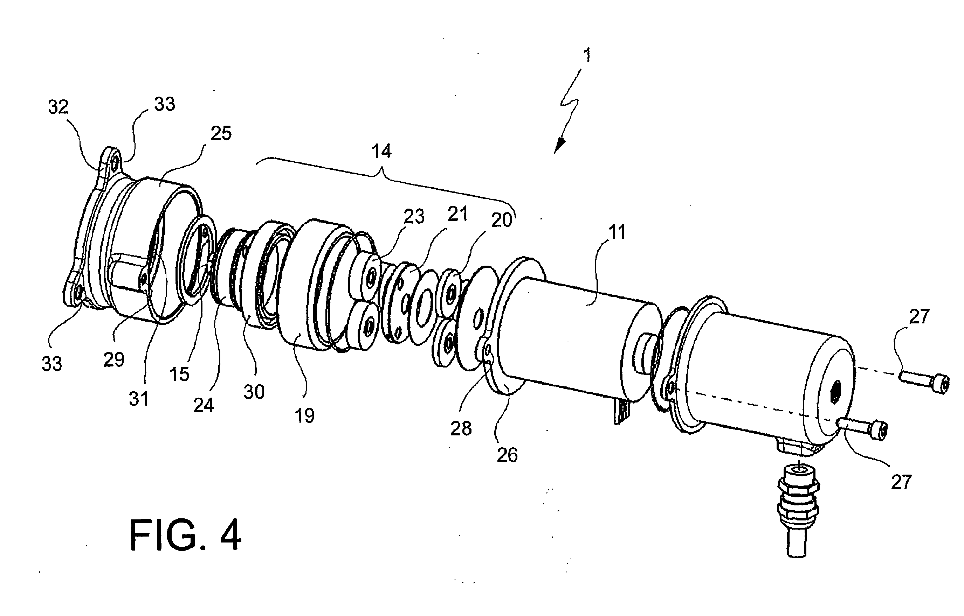

figure 4 is an exploded view with parts detached of an actuation group of the parking brake in figure 3,

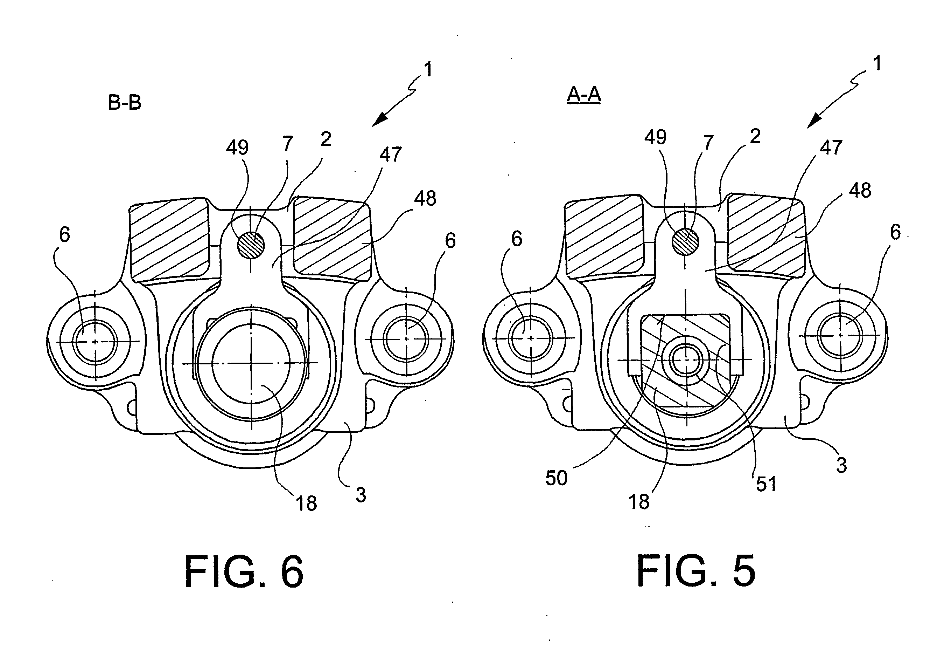

figures 5 and 6 are section views according to the lines A-A and B-B in figure 3.

With reference to the figures, an electromechanical parking brake is wholly indicated with reference numeral 1. The parking brake 1 comprises a caliper 2 with two spaced apart side walls 3 that define a disc space 4 for receiving a portion of a brake disc (not shown). The parking brake 1 also comprises means for attaching the caliper 2 to the suspension of the vehicle or to a caliper of a service disc brake.

For example, these attachment means are made in at least two holes defined by one of the side walls 3 and suitable for receiving respective attachment screws. Alternatively, the attachment means of the parking brake 1 comprise one or more pins 5 and/or cylindrical seats 6 suitable for slidably receiving corresponding cylindrical seats and/or pins of a fixed caliper of a service disc brake to support the caliper 2 of the parking brake 1 as a floating caliper.

The two walls 3 of the caliper 2 are connected together through a connection structure 48 that extends straddling the disc space 4 and each of the walls 3 or a support portion 7 connected to them defines at least one seat for receiving or supporting a pad 9.

In accordance with an embodiment, the support portion comprises a support pin 7 connected to both of the side walls 3 and extending straddling the disc space 4. The support plates of the pads 9, in their top part (radially outer with reference to the axis of the brake disc), define a hole 10 that receives the support pin 7 to fix the pads hung at the caliper 2.

The parking brake 1 also comprises electromechanical thrusting means that comprise:

- an electric motor 11,

- first transmission means 13 of the rotary motion of a drive shaft 12 of the electric motor 11 to a planetary reduction gear 14,

- the planetary reduction gear 14,

- second transmission means 15 of the rotary motion of the planetary reduction gear 14 to a nut-screw group 16, 17 for transforming the motion,

- the nut-screw group 16, 17 for transforming the rotary motion of the planetary reduction gear 14 into a translation motion applicable to a piston 18,

- the piston 18 in contact with the pad 9 to lock it against the brake disc.

According to an aspect of the present invention, the electric motor 11, the first transmission means 13, the planetary reduction gear 14, the second transmission means 15 and the nut-screw group 16, 17 are arranged coaxially to a central axis X of the piston 18. In this way a substantial reduction in lateral bulk of the thrusting group is obtained and the connection of the parking brake 1 to a fixed caliper of the disc brake is made easier.

According to an embodiment, the first transmission means 13 comprise a connection portion 13 formed on the end of the drive shaft 12 and having an outer toothing that engages the planetary gear wheels 20 of a first train of planets of the planetary reducer 14, so that the drive shaft 12 forms the central pinion 13 of a first reduction stage of the planetary reduction gear 14. In this way, the functions of the motor-reducer connection, of the transmission of motion and of the central pinion are combined in a single component, in other words in the drive shaft 12, 13. This results in an axial compacting of the thrusting group, a reduction in the number of individual mechanical components, thus avoiding problems linked to clearances and tolerances.

The planetary reduction gear 14 preferably comprises two reduction stages, the first reduction stage of which includes the aforementioned central pinion 13 (planet) formed from the end 13 of the drive shaft 12, an outer crown with inner toothing 19 locked in rotation and the aforementioned first train of planetary gear wheels 20 that engage both the central pinion 13 and the crown 19. The first planetary gear wheels 20 are supported by a first planet-carrying plate 21 that, in turn, comprises a toothed central portion 22 that constitutes a central pinion (planet) of a second reduction stage.

Such a second reduction stage comprises, as well as the second central pinion (planet) formed from the toothed central portion 22 of the first planet-carrying plate 21, the same outer crown with inner toothing 19 and a second train of planetary gear wheels 23 that engage both the second central pinion 22 and the crown 19.

The second planetary gear wheels 23 are supported by a second planet-carrying plate 24 that makes the connection with the nut-screw group 16, 17.

In accordance with an embodiment, the axial thicknesses of the planetary gear wheels 20 of the first reduction stage and of the planetary gear wheels 23 of the second reduction stage are differentiated according to the moment to be transmitted. In particular, the thickness of the planetary gear wheels 20 of the first reduction stage is less than the thickness of the planetary gear wheels 23 of the second reduction stage, so as to obtain a further reduction in axial bulk of the thrusting group.

In accordance with a further development of the invention, the crown gear 19 is manufactured separate from a reducer housing 25 and then inserted into it. This makes it possible to optimise the thicknesses and the materials of the crown gear 19 and of the reducer housing 25 independently from each other to reduce the weight and the production cost of the parking brake. In particular, the reducer housing 25 could be manufactured in a different material to that of the crown gear, for example plastic material or else through pressure die casting in aluminium/magnesium alloy.

Moreover, according to an embodiment, the electric motor 11 comprises a front flange 26 that can be connected to the reducer housing 25, for example through two screws 27 that can be inserted into two holes 28 formed in the front flange 26 and that can be screwed into two internally threaded holes 29 of the reducer housing 25. The front flange 26 preferably comprises centring means, for example engagement seats or surfaces, suitable for engaging the crown gear 19 so as to position it and centre it with respect.to the drive shaft 12. In this way expensive precision mechanical processing of a plurality of inner surfaces of the reducer housing 25 is avoided. As an example, the means (for example one or more projections) for locking the crown gear 19 in rotation can also be made in the front flange 26 of the electric motor 11.
Alternatively, the means for locking the crown gear 19 in rotation act between the crown gear 19 and the reducer housing 25 and can comprise interference connection means (e.g. crown gear fitted and locked in the reducer housing), shape connection means (e.g. of the tooth-recess type or of the key-recess type) and/or gluing of the crown gear 19 in the reducer housing 25.

The second planet-carrying plate 24 is connected to the reducer housing 25 and centred through a radial bearing 30 received in a seat 31 of the reducer housing 25.

The reducer housing 25 in turn has means for a removable connection with the caliper 2, for example a connection flange 32 with holes 33 for receiving screws 34 that can be screwed into threaded seats 35 of the caliper 2.

In this way, it is possible to pre-assemble the entire electromechanical thrusting group, with the exception of the nut-screw group, separately from the caliper 2, as well as remove it and reconnect it easily during maintenance and repair interventions of the brake.

Moreover, thanks to the configurations of the reducer housing 25, of the radial bearing 30 and of the front flange 26 of the engine described above, the entire planetary reduction gear 14 is supported and centred inside the reducer housing 25 through the use of a single bearing.

The second planet-carrying plate 24 comprises a central projection 36 coaxial to the central pinions 13 and 22. The central projection 36 forms a shaft for transmitting the rotary motion going out from the planetary reduction gear (and to be precise the rotary motion of the second planet-carrying plate 24 with which the shaft 36 is formed in one piece) to the screw 16 of the nut-screw group 16, 17. For this purpose, the central projection 36 comprises a shape coupling portion, preferably polygonal, which removably engages a corresponding coupling seat 37 formed in an outer portion of the screw 16 facing towards the electric motor 11.

In this way, the second planet-carrying plate 24 also constitutes the aforementioned means 15 for transmitting the motion from the planetary reduction gear 14 to the nut-screw group.

The screw 16 is received inside the same cylindrical seat 38 that receives the piston 18. Such a cylindrical seat 38 is formed in one of the side walls 3 of the caliper 2 and has a cylindrical side surface and an annular base wall 39 that defines a central hole 40 that allows the passage and the mutual engagement of the central projection 36 of the second planet-carrying plate 24 and of the outer portion of the screw 16.

The screw 16 comprises, as well as the outer portion with the coupling seat 37, an abutment flange 42 that abuts resting so that it can slide (preferably through the interpositions of an axial bearing 41) against an inner surface of the annular base wall 39. The outer portion of the screw 16 is fixedly connected to an outer surface of the base wall 39, for example through a flat ring 43, for example a Seeger ring, so that the entire screw 16 is axially firmly connected inside the piston seat 38.
In accordance with an embodiment, on the side of the central hole 40 facing towards the electric motor 11 there can be a bushing or a radial bearing 52, for example a sliding bearing, for better centring of the screw 16.

The screw 16 also comprises an externally threaded screw shank 44 that projects from the intermediate flange portion 42 axially towards the inside of the caliper. The threading of the screw shank 44 directly engages (and in particular without ball recirculation) a corresponding inner threading of the nut 17, which is fixedly connected so as not to be able to rotate so that the rotation of the screw 16 generates a translation movement of the nut along the central axis X. Such a rotational restriction can, for example, be made through a anti-rotation plate 47 that engages both the piston 18 and the caliper 2 and a shape coupling between the piston 18 and the nut 17.

In accordance with an embodiment, the anti-rotation plate 47 has a hole 49 for receiving the same support pin 7 that also supports the pads 9 and a polygonal opening 50 that engages a corresponding polygonal seat 51 formed in the piston 18.

According to an embodiment, the nut 17 is manufactured separately from the piston 18 and has a thrusting portion 45, for example at least partially conical, suitable for engaging a corresponding thrusting seat 46 of the piston 18 with a shape at least partially matching that of the thrusting portion 45.

In this way, threading machining is avoided on the rear side of the piston.
Hooking means can also be foreseen that couple the piston 18 with the nut 17 so that they translate together not just in the direction of the piston going towards the disc but also going away from each other. This allows controlled positioning of the piston even during the release of the parking brake. In accordance with an embodiment, such hooking means comprise a Seeger ring inserted in a groove and resting against a shoulder of the piston 18 and of the nut 17, respectively.

In order to further compact the thrusting group, the piston 18 is advantageously hollow cup-shaped and receives inside of it the nut 17 and a predominant portion of the screw 16.

The parking brake described up to now can advantageously be slidably connected to a fixed caliper of the disc brake, such as to act as a parking brake with floating caliper.

During use, the supply of current to the electric motor makes the drive shaft rotate, which transmits its motion directly to the first reduction stage of the planetary reduction gear that reduces the speed of rotation and increases the twisting moment. Such reduced motion is transmitted to the nut-screw group that transforms it into a translation motion and applies it to the piston that, in turn, thrusts the pad against the brake disc to lock it. The resistance of the direct engagement between the threads of the nut-screw group is sufficient to maintain the axial pressure on the disc even in the absence of a twisting moment applied on the screw. In this way it is possible to limit the power supply of the electric motor to just the movement operations of the nut-screw group (locking and release of the parking brake) and limit the motor current in the stationary steps in which there is no further movement of the nut-screw group.

Of course, a man skilled in the art can make further modifications and variants to the parking brake according to the present invention, in order to satisfy contingent and specific requirements, all of which are covered by the scope of protection of the invention, as defined by the following claims.

## Claims

1. Parking brake (1) for a disc brake, comprising:
- a caliper (2) with two spaced apart side walls (3) that define a space (4) for receiving a portion of a brake disc, said side walls (3) being connected together through a connection structure (48) that extends straddling the disc space (4),
- means (7) for supporting at least one pad (9) at each of said side walls (3),
- an electromechanical thrusting group connected with one of said side walls (3) of the caliper (2) and suitable for biasing the pads (9) against the brake disc to lock it,
wherein said electromechanical thrusting group comprises:
- a piston (18) suitable for locking the pad (9) against the brake disc,
- a planetary reduction gear (14) comprising two reduction stages received in a reducer housing (25) and having an outer crown gear (19) manufactured separately from and inserted in said reducer housing (25),
- an electric motor (11) including a shaft (12) and comprising a front flange (26) that can be connected to the reducer housing (25),
- a nut-screw group (16, 17) for transforming the rotary motion of the planetary reduction gear (14) into a translation motion applicable to the piston (18),
- first transmission means (13) for transmitting the rotary motion of the electric motor (11) to the planetary reduction gear (14),
- second transmission means (15) for transmitting the rotary motion of the planetary reduction gear (14) to the nut-screw group (16, 17) for transforming the motion, wherein the shaft (12) of the electric motor (11), the first transmission means (13), the planetary reduction gear (14), the second transmission means (15) and the nut-screw group (16, 17) are arranged coaxially to a central axis (X) of the piston (18),
**characterized in that** planetary gear wheels (22, 23) of said two reduction stages mesh both with said same crown gear (19) and said front flange (26) of the electric motor (11) has one or more centring seats suitable for engaging the crown gear (19) so as to centre it with respect to the drive shaft (12).

2. Parking brake (1) according to claim 1, wherein the first transmission means (13) comprise a central pinion (13) of a first reduction stage of the planetary reduction gear (14) formed in one piece with the drive shaft (12).

3. Parking brake (1) according to claim 1 or 2, wherein said planetary reduction gear (14) comprises two reduction stages, and the axial thickness of the planetary gear wheels (20) of the first reduction stage is less than the axial thickness of the planetary gear wheels (23) of the second reduction stage.

4. Parking brake (1) according to claim 43, wherein the reducer housing (25) is manufactured in a different material from that of the crown gear (19).

5. Parking brake (1) according to claim 1, wherein the reducer housing (25) has means for a removable connection between the caliper (2) and the motor-reducer group (11, 14).

6. Parking brake (1) according to claim 1, wherein the entire planetary reduction gear (14) is supported and centred inside the reducer housing (25) through a single unilateral bearing (30).

7. Parking brake (1) according to any one of the previous claims, wherein said second transmission means (15) consist of a planet-carrying plate (24) of the planetary reduction gear (14) that comprises a central monoblock projection (36) shaped to removably engage a coupling seat (37) of a screw (16) of the nut-screw group (16, 17) so that they rotate as a unit.

8. Parking brake (1) according to any one of the previous claims, wherein said nut-screw group (16, 17) is received inside a cylindrical piston seat (38) of the caliper (2) that also receives the piston (18).

9. Parking brake (1) according to any one of the previous claims, wherein said nut-screw group (16, 17) comprises a screw (16) with an outer threading that directly engages a corresponding inner threading of a nut (17) locked in rotation and in contact pressing against the piston (18).

10. Parking brake (1) according to claim 9, wherein the nut (17) is manufactured separately from the piston (18) and has a thrusting portion (45), which engages a corresponding thrusting seat (46) of the piston (18).

11. Parking brake (1) according to any one of the previous claims, wherein the piston (18) is hollow cup-shaped and receives inside of it the entire nut (17) and at least one portion of the screw (16) of said nut-screw group (16, 17).

12. Parking bake (1) according to any one of the previous claims, comprising a anti-rotation plate (47) that engages both the piston (18) and the caliper (2) and a shape coupling between the piston (18) and the nut (17) of the nut-screw group (16, 17).

13. Parking brake (1) according to claim 12, wherein said anti-rotation plate (47) has a hole (49) to receive the same support pin (7) that also supports the pads (9) and a polygonal opening (50) that engages a corresponding polygonal seat (51) formed in the piston (18).

14. Parking brake (1) according to any one of the previous claims, comprising means for attaching the caliper (2) to a fixed caliper of a service disc brake.

15. Parking brake (1) according to claim 14, wherein said attachment means comprise one or more pins (5) and/or cylindrical seats (6) suitable for slidably receiving corresponding cylindrical seats and/or pins of the fixed caliper of the service disc brake for floating support of the caliper (2) of the parking brake (1).

16. Parking brake (1) according to claim 1, comprising means for locking the crown gear (19) in rotation, said means being arranged between the crown gear (19) and the reducer housing (25) and being selected from the group comprising:
- interference connection means,
- shape connection means,
- and/or gluing of the crown gear (19) in the reducer housing (25).

17. Parking brake (1) according to claim 10 or any one of the subsequent claims, comprising hooking means that couple the piston (18) with the nut (17) so that they translate together taking the piston away from the disc.

18. Parking brake (1) according to claim 17, wherein said hooking means comprise a Seeger ring inserted in a groove and resting against a shoulder respectively of the piston (18) and of the nut (17).

## Patentansprüche

1. Feststellbremse (1) für eine Scheibenbremse, umfassend:
- einen Bremssattel (2) mit zwei voneinander beabstandeten Seitenwänden (3), welche einen Raum (4) zum Aufnehmen eines Abschnitts einer Bremsscheibe definieren,
wobei die Seitenwände (3) miteinander durch eine Verbindungsstruktur (48) verbunden sind, welche sich überspannend über den Scheibenraum (4) erstreckt,
- Mittel (7) zum Tragen von wenigstens einem Belag (9) an jeder der Seitenwände (3),
- eine elektromechanische Schiebeanordnung, welche mit einer der Seitenwände (3) des Bremssattels (2) verbunden ist und dazu geeignet ist, die Beläge (9) gegen die Bremsscheibe vorzuspannen, um diese zu blockieren,
wobei die elektromechanische Schiebeanordnung umfasst:
- einen Kolben (18), welcher dazu geeignet ist, den Belag (9) gegen die Bremsscheibe zu blockieren,
- ein Planetenuntersetzungsgetriebe (14), welches zwei in einem Untersetzungsgehäuse (25) aufgenommene Untersetzungsstufen umfasst und einen äußeren Zahnkranz (19) aufweist, welcher unabhängig von dem Untersetzungsgehäuse (25) hergestellt und in dieses eingefügt ist,
- einen Elektromotor (11), welcher eine Welle (12) umfasst und welcher einen Vorderflansch (26) umfasst, der an dem Untersetzungsgehäuse (25) angeschlossen werden kann,
- eine Schraubenmutteranordnung (16, 17) zum Transformieren der Drehbewegung des Planetenuntersetzungsgetriebes (14) in eine Translationsbewegung, welche auf den Kolben (18) anwendbar ist,
- erste Übertragungsmittel (13) zum Übertragen der Drehbewegung des Elektromotors (11) auf das Planetenuntersetzungsgetriebe (14),
- zweite Übertragungsmittel (15) zum Übertragen der Drehbewegung des Planetenuntersetzungsgetriebes (14) auf die Schraubenmutteranordnung (16, 17), um die Bewegung zu transformieren,
wobei die Welle (12) des Elektromotors (11), die ersten Übertragungsmittel (13), das Planetenuntersetzungsgetriebe (14), die zweiten Übertragungsmittel (15) und die Schraubenmutteranordnung (16, 17) koaxial zu einer Mittelachse (X) des Kolbens (18) angeordnet sind, **dadurch gekennzeichnet,**
**dass** Planetengetrieberäder (22, 23) der zwei Untersetzungsstufen sich beide mit demselben Zahnkranz (19) verzahnen und
**dass** der Vorderflansch (26) des Elektromotors (11) einen oder mehrere Zentriersitze aufweist, welche dazu geeignet sind, mit dem Zahnkranz (19) in Eingriff zu treten, um diesen bezüglich der Antriebswelle (12) zu zentrieren.

2. Feststellbremse (1) nach Anspruch 1,
wobei die ersten Übertragungsmittel (13) ein zentrales Ritzel (13) einer ersten Untersetzungsstufe des Planetenuntersetzungsgetriebes (14) umfassen, welches einstückig mit der Antriebswelle (12) gebildet ist.

3. Feststellbremse (1) nach Anspruch 1 oder 2,
wobei das Planetenuntersetzungsgetriebe (14) zwei Untersetzungsstufen umfasst, und
wobei die axiale Dicke der Planetengetrieberäder (20) der ersten Untersetzungsstufe kleiner als die axiale Dicke der Planetengetrieberäder (23) der zweiten Untersetzungsstufe ist.

4. Feststellbremse (1) nach Anspruch 3,
wobei das Untersetzungsgehäuse (25) aus einem Material hergestellt ist, welches von demjenigen des Zahnkranzes (19) verschieden ist.

5. Feststellbremse (1) nach Anspruch 1,
wobei das Untersetzungsgehäuse (25) Mittel für eine lösbare Verbindung zwischen dem Bremssattel (2) und der Motor-Untersetzung-Gruppe (11, 14) aufweist.

6. Feststellbremse (1) nach Anspruch 1,
wobei das ganze Planetenuntersetzungsgetriebe (14) innerhalb des Untersetzungsgehäuses (25) durch ein einziges unilaterales Lager (30) getragen und zentriert ist.

7. Feststellbremse (1) nach einem der vorhergehenden Ansprüche,
wobei die zweiten Übertragungsmittel (15) aus einer Planetenträgerplatte (24) des Planetenuntersetzungsgetriebes (14) bestehen, welche einen zentralen Monoblockvorsprung (36) umfasst, der derart geformt ist, um mit einem Kupplungssitz (37) einer Schraube (16) der Schraubenmutteranordnung (16, 17) lösbar in Eingriff zu treten, so dass sie als eine Einheit rotieren.

8. Feststellbremse (1) nach einem der vorhergehenden Ansprüche,
wobei die Schraubenmutteranordnung (16, 17) innerhalb eines zylindrischen Kolbensitzes (38) des Bremssattels (2) aufgenommen ist, welcher auch den Kolben (18) aufnimmt.

9. Feststellbremse (1) nach einem der vorhergehenden Ansprüche,
wobei die Schraubenmutteranordnung (16, 17) eine Schraube (16) mit einem Außengewinde umfasst, welches mit einem entsprechenden Innengewinde einer Mutter (17) direkt in Eingriff tritt, die drehverriegelt ist und in Druckkontakt mit dem Kolben (18) steht.

10. Feststellbremse (1) nach Anspruch 9,
wobei die Mutter (17) von dem Kolben (18) getrennt hergestellt ist und einen Schiebeabschnitt (45) aufweist, welcher mit einem entsprechenden Schiebesitz (46) des Kolbens (18) in Eingriff tritt.

11. Feststellbremse (1) nach einem der vorhergehenden Ansprüche,
wobei der Kolben (18) eine hohle Becherform aufweist und in dessen Inneren die gesamte Mutter (17) und wenigstens einen Abschnitt der Schraube (16) der Schraubenmutteranordnung (16, 17) aufnimmt.

12. Feststellbremse (1) nach einem der vorhergehenden Ansprüche, umfassend eine Verdrehsicherungsplatte (47), welche sowohl mit dem Kolben (18) als auch mit dem Bremssattel (2) in Eingriff tritt, und eine Formkopplung zwischen dem Kolben (18) und der Schraube (17) der Schraubenmutteranordnung (16, 17).

13. Feststellbremse (1) nach Anspruch 12,
wobei die Vedrehsicherungsplatte (47) ein Loch (49) aufweist, um denselben Halterungsstift (7) aufzunehmen, welcher auch die Beläge (9) trägt, und eine polygonale Öffnung (50) aufweist, welche mit einem entsprechenden in dem Kolben (18) gebildeten polygonalen Sitz (51) in Eingriff tritt.

14. Feststellbremse (1) nach einem der vorhergehenden Ansprüche, umfassend Mittel zum Befestigen des Bremssattels (2) an einem festsitzenden Bremssattel einer Betriebsscheibenbremse.

15. Feststellbremse (1) nach Anspruch 14,
wobei die Befestigungsmittel einen oder mehrere Stifte (5) oder/und zylindrische Sitze (6) umfassen, welche geeignet sind, die entsprechenden zylindrischen Sitze oder/und Stifte des festsitzenden Bremssattels der Betriebsscheibenbremse auf gleitende Weise aufzunehmen, um den Bremssattel (2) der Feststellbremse (1) schwebend zu halten.

16. Feststellbremse (1) nach Anspruch 1,
umfassend Mittel zur Drehverriegelung des Zahnkranzes (19),
wobei die Mittel zwischen dem Zahnkranz (19) und dem Untersetzungsgehäuse (25) angeordnet sind und aus der Gruppe ausgewählt sind, welche umfasst:
- Reibschlussverbindungsmittel,
- Formschlussverbindungsmittel,
- oder/und Kleben des Zahnkranzes (19) in das Untersetzungsgehäuse (25).

17. Feststellbremse (1) nach Anspruch 10 oder einem der nachfolgenden Ansprüche,
umfassend Einhackmittel, welche den Kolben (18) mit der Mutter (17) koppeln, so dass sie gemeinsam verrücken, wobei sie den Kolben von der Scheibe wegziehen.

18. Feststellbremse (1) nach Anspruch 17,
wobei die Einhackmittel einen Seeger-Ring umfassen, welcher in eine Rille eingefügt ist und an einer Schulter des Kolbens (18) beziehungsweise der Mutter (17) anliegt.

## Revendications

1. Frein de stationnement (1) pour un frein à disque, comprenant :
- un étrier (2) avec deux parois latérales écartées l'une de l'autre (3) qui définissent un espace (4) pour recevoir une portion d'un disque de frein, lesdites parois latérales (3) étant connectées ensemble via une structure de connexion (48) qui s'étend en chevauchant l'espace à disque (4),
- des moyens (7) pour supporter au moins un patin (9) sur chacune desdites parois latérales (3),
- un groupe de poussée électromécanique connecté à l'une desdites parois latérales (3) de l'étrier (2) et approprié pour solliciter les patins (9) contre le disque de frein pour le bloquer,
dans lequel ledit groupe de poussée électromécanique comprend :
- un piston (18) approprié pour bloquer le patin (9) contre le disque de frein,
- un mécanisme de réduction à planétaires (14) comprenant deux étages de réduction reçus dans un boîtier de réducteur (25) et ayant une couronne dentée extérieure (19) fabriquée séparément et insérée dans ledit boîtier de réducteur (25),
- un moteur électrique (11) incluant un arbre (12) et comprenant une bride frontale (26) qui peut être connectée au boîtier de réducteur (25),
- un groupe vis-écrou (16, 17) pour transformer le mouvement rotatif du mécanisme de réduction à planétaires (14) en un mouvement de translation applicable au piston (18),
- des premiers moyens de transmission (13) pour transmettre le mouvement rotatif du moteur électrique (11) au mécanisme de réduction à planétaires (14),
- des seconds moyens de transmission (15) pour transmettre le mouvement rotatif du mécanisme de réduction à planétaires (14) au groupe vis-écrou (16, 17) pour transformer le mouvement,
dans lequel l'arbre (12) du moteur électrique (11), les premiers moyens de transmission (13), le mécanisme de réduction à planétaires (14), les seconds moyens de transmission (15), et le groupe vis-écrou (16, 17) sont agencés coaxialement à un axe central (X) du piston (18), **caractérisé en ce que** les engrenages planétaires (22, 23) desdits deux étages de réduction sont tous les deux en engrènement avec la même couronne dentée (19), et ladite bride frontale (26) du moteur électrique (11) comporte un ou plusieurs sièges de centrage appropriés pour venir engager la couronne dentée (19) de manière à la centrer par rapport à l'arbre d'entraînement (12).

2. Frein de stationnement (1) selon la revendication 1, dans lequel les premiers moyens de transmission (13) comprennent un pignon central (13) d'un premier étage de réduction du mécanisme de réduction à planétaires (14) formé d'une seule pièce avec l'arbre d'entraînement (12).

3. Frein de stationnement (1) selon la revendication 1 ou 2, dans lequel ledit mécanisme de réduction à planétaires (14) comprend deux étages de réduction, et l'épaisseur axiale des engrenages de planétaires (20) du premier étage de réduction est inférieure à l'épaisseur axiale des engrenages planétaires (23) du second étage de réduction.

4. Frein de stationnement (1) selon la revendication 3, dans lequel le boîtier de réducteur (25) est produit en un matériau différent de celui de la couronne dentée (19).

5. Frein de stationnement (1) selon la revendication 1, dans lequel le boîtier de réducteur (25) comprend des moyens pour une connexion amovible entre l'étrier (2) et le groupe motoréducteur (11, 14).

6. Frein de stationnement (1) selon la revendication 1, dans lequel le mécanisme de réduction à planétaires (14) entier est supporté et centré à l'intérieur du boîtier de réducteur (25) via un unique palier unilatéral (30).

7. Frein de stationnement (1) selon l'une quelconque des revendications précédentes, dans lequel lesdits seconds moyens de transmission (15) consistent en une plaque porte-planétaires (24) du mécanisme de réduction à planétaires (14) qui comprend une projection monobloc centrale (36) conformée pour engager de façon amovible un siège de couplage (37) d'une vis (16) du groupe vis-écrou (16, 17) de telle façon qu'ils tournent comme une unité.

8. Frein de stationnement (1) selon l'une quelconque des revendications précédentes, dans lequel ledit groupe vis-écrou (16, 17) est reçu à l'intérieur d'un siège de piston cylindrique (38) de l'étrier (2) qui reçoit aussi le piston (18).

9. Frein de stationnement (1) selon l'une quelconque des revendications précédentes, dans lequel ledit groupe vis-écrou (16, 17) comprend une vis (16) avec un filetage extérieur qui engage directement un taraudage intérieur correspondant d'un écrou (17) bloqué en rotation et en contact de pressage contre le piston (18).

10. Frein de stationnement (1) selon la revendication 9, dans lequel l'écrou (17) est fabriqué séparément du piston (18) et comprend une portion de poussée (45) qui engage un siège de poussée correspondant (46) du piston (18).

11. Frein de stationnement (1) selon l'une quelconque des revendications précédentes, dans lequel le piston (18) est en forme de coupelle creuse et reçoit à l'intérieur de lui-même la totalité de l'écrou (17) et au moins une portion de la vis (16) dudit groupe vis-écrou (16, 17).

12. Frein de stationnement (1) selon l'une quelconque des revendications précédentes, comprenant une plaque antirotation (47) qui engage à la fois le piston (18) et l'étrier (2) et un accouplement à coopération de formes entre le piston (18) et l'écrou (17) du groupe vis-écrou (16, 17).

13. Frein de stationnement (1) selon la revendication 12, dans lequel ladite plaque antirotation (47) comporte un trou (49) pour recevoir la même tige de support (7) qui supporte également les patins (9) et une ouverture polygonale (50) qui engage un siège polygonal correspondant (51) formé dans le piston (18).

14. Frein de stationnement (1) selon l'une quelconque des revendications précédentes, comprenant des moyens pour attacher l'étrier (2) sur un étrier fixe d'un frein à disque de service.

15. Frein de stationnement (1) selon la revendication 14, dans lequel lesdits moyens d'attache comprennent une ou plusieurs tiges (5) et/ou un ou plusieurs sièges cylindriques (16) appropriés pour recevoir en coulissement des sièges et/ou des tiges cylindriques correspondant(e)s de l'étrier fixe du frein à disque de service pour un support flottant de l'étrier (2) du frein de stationnement (1).

16. Frein de stationnement (1) selon la revendication 1, comprenant des moyens pour bloquer la couronne dentée (19) en rotation, lesdits moyens étant agencés entre la couronne dentée (19) et le boîtier de réducteur (25) et étant choisis parmi le groupe comprenant :
- des moyens de connexion à interférence,
- les moyens de connexion à coopération de formes,
- et/ou un collage de la couronne dentée (19) dans le boîtier de réducteur (25).

17. Frein de stationnement (1) selon la revendication 10 ou l'une quelconque des revendications suivantes, comprenant des moyens d'accrochage qui accouplent le piston (18) avec l'écrou (17) de manière à être en translation ensemble en éloignant le piston vis-à-vis du disque.

18. Frein de stationnement (1) selon la revendication 17, dans lequel lesdits moyens d'accrochage comprennent un circlip inséré dans une gorge et reposant contre un épaulement respectivement du piston (18) et de l'écrou (17).
